## Europäisches Patentamt

## European Patent Office

## Office européen des brevets

(19)

(11) Publication number: **0 099 660**
**B1**

(12) **EUROPEAN PATENT SPECIFICATION**

(45) Date of publication of patent specification: **12.11.86**

(51) Int. Cl.⁴: **C 08 F 10/02, C 08 F 2/34**

(21) Application number: **83303652.8**

(22) Date of filing: **24.06.83**

(54) **Co-catalyst dispension method.**

(30) Priority: **12.07.82 US 397656**

(43) Date of publication of application:
**01.02.84 Bulletin 84/05**

(45) Publication of the grant of the patent:
**12.11.86 Bulletin 86/46**

(84) Designated Contracting States:
**AT BE DE FR GB IT NL SE**

(56) References cited:
**FR-A-1 178 041**
**FR-A-1 188 575**
**FR-A-2 312 512**

(73) Proprietor: **CITIES SERVICE COMPANY**
**110 W. 7th Street P.O. Box 300**
**Tulsa Oklahoma 74102 (US)**

(72) Inventor: **Ahluwalia, Mohinder S.**
**704 Magazine Street**
**Lake Charles 70605 (US)**
Inventor: **Junker, Michael L.**
**1010 Contraband Lane**
**Lake Charles 70605 (US)**

(74) Representative: **Harrison, David Christopher et al**
**MEWBURN ELLIS & CO 2/3 Cursitor Street**
**London EC4A 1BQ (GB)**

Courier Press, Leamington Spa, England.

## Description

This invention relates to catalysts used in the polymerization of olefins. More particularly, it relates to the addition of a co-catalyst into a gas-phase fluidized-bed olefin polymerization reactor. In a preferred embodiment, the invention relates to dilution of the co-catalyst by the olefin to be polymerized, prior to the introduction of the co-catalyst into the gas-phase fluidized-bed olefin polymerization reactor wherein a Ziegler-type catalyst is used, so that the co-catalyst is substantially uniformly dispersed in the catalyst bed of the reactor. The utility of the invention lies in its use in polyolefin production.

In a typical gas-phase fluidized-bed reactor for the polymerization of olefins, wherein a Ziegler-type catalyst is used, such as high density polyethylene or linear low density polyethylene, the olefin, in the gas-phase but under pressure, is fed into the reactor, where it contacts a fluidized-bed of polymer particles containing the supported Ziegler-type polymerization catalyst. For such polymerization, a co-catalyst, or activator, is needed. Broadly, organometallic compounds of Periodic Groups 1—3 are used as co-catalysts. One example of such a co-catalyst is an aluminum alkyl, such as triethyl aluminum (TEA).

In a gas phase reactor, the various streams that typically enter the reactor, assuming the fluidized-bed of polymer particles is in place, are the polymerizable olefin, hydrogen (molecular weight modifier), a co-monomer olefin (such as propylene, as a density modifier) and an activator (co-catalyst). Since it is preferred that the activator, such as TEA, be added in a dilute stream so that an excess does not contact a limited amount of catalyst, various methods of adding diluted activator to the reactor have been tried.

Since most activators have a low vapor pressure, it is not possible to heat them to such a temperature that the resultant vapor can be introduced with the olefin feed. Various attempts have been made to form an atomized mist of the co-catalyst prior to introduction into the reactor, but it has been found that such a mist gives fairly large droplets that contact the catalyst particles, resulting in overloading of a few catalyst particles with the co-catalyst and underloading of others, with subsequent reduction of catalyst activity.

If conditions can be found so that a smaller amount of co-catalyst contacts each catalyst particle, a more controlled and uniform reactivity should result. We believe that we have found these conditions, thus offering a simple and efficient method of introducing the co-catalyst into the reactor so that the catalyst particles in the fluidized-bed contact the desirable amount of activator and sustain a desirable level of polymerization activity.

Our invention is a method of adding a co-catalyst or activator to a gas-phase fluidized-bed olefin polymerization reactor that is operating under typical conditions using a Ziegler-type catalyst. In a separate container external to the reactor, we mix the liquid co-catalyst with a polymerizable olefin, thus forming a solution or mixture of co-catalyst and olefin. This mixture or solution is then introduced or fed into the reactor at a reaction-sustaining rate. The liquid olefin vaporizes, leaving the co-catalyst on the polymer particles.

In the prior art FR—A—1 188 575 shows a slurry-type reaction in which co-catalyst may be added to the reaction vessel in a diluent.

This invention, on the other hand, is for those olefin polymerizaions that take place in a gas-phase fluidized-bed reactor. Examples of such polymerizations are those involving high density polyethylene and linear low density polyethylene, in which the monomer is substantially ethylene. Thus the following discussion is primarily concerned with the use of ethylene as a diluent for the co-catalyst, or activator, used in an ethylene polymerization reactor.

Other olefins, such as propylene, can be used as diluents, but ethylene is preferred because it vaporizes more quickly and is the major constituent of the polyethylenes. Alpha-olefins are not used when preparing ethylene homopolymers.

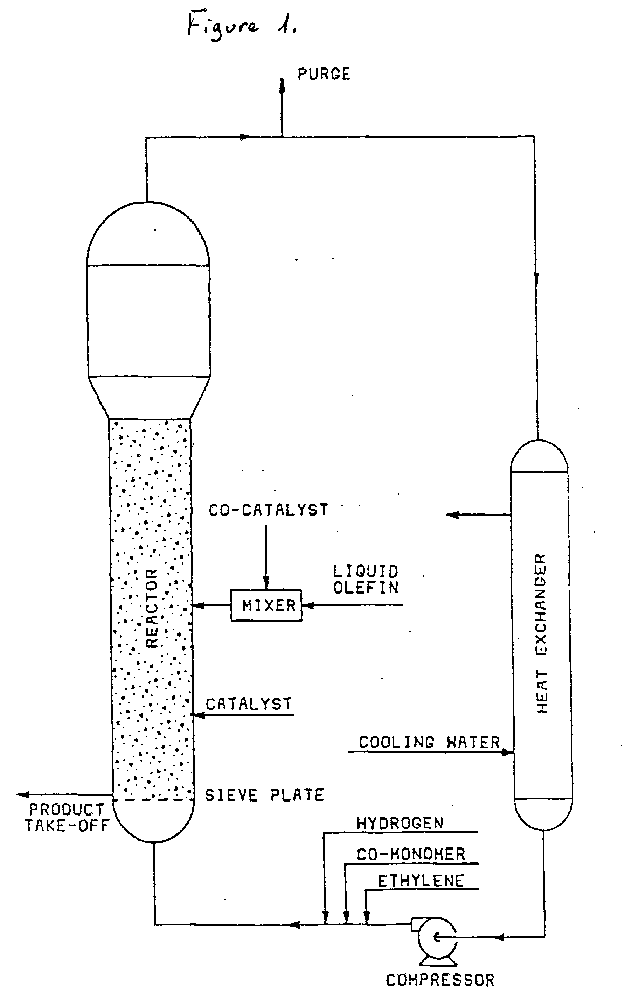

Broadly, a gas-phase fluidized-bed polymerization reactor concerns a closed-loop reactor, such as shown in the Figure, in which catalyst/polyolefin particles form a fluidized bed. These particles are called polymer particles. Typically, some polyolefin has formed from polymerization around an active catalyst site. As additional gaseous olefin contacts such a particle, additional polyolefin is formed. Periodically, fresh catalyst, exemplified by a supported Ziegler catalyst, is added to the reactor, to maintain a desirable production rate. A co-catalyst, or activator, is needed in the reactor to activate the catalyst and maintain its activity. Examples of co-catalysts are triethyl aluminum (TEA), di-isobutyl aluminum hydride, tri-hexyl aluminum, diethyl aluminum chloride and diethyl aluminum ethoxide.

The Figure shows a flow diagram of a closed loop polymerization reactor which is one embodiment of apparatus used for this invention. Olefin feed enters the system, is compressed, and flows upwardly through the sieve plate at a rate sufficient to fluidize the catalyst bed. A certain amount of polymerization occurs in the reactor, with the unreacted olefin passing into the overhead and then on through the loop, being cooled, if necessary, in the heat exchanger. In the reactor loop, hydrogen, co-monomer, catalyst, and olefin (as used in the invention) can be added to the system. The Figure does not show the typical auxiliary equipment, such as temperature, pressure, and level controls, gas analyzers, etc.

When a proper amount of co-catalyst contacts a particle comprising polyolefin and a catalyst nucleus, the catalyst is activated, and the rate of polymerization of ethylene on the catalyst particle is increased. When this polymerization of ethylene on such a particle takes place for a period of time, the particle grows to a size where it is ultimately removed from the reactor.

During the activation process, if too much co-catalyst contacts the catalyst particle, the catalytic activity is not only reduced, but actual harm may result. One of the less desirable effects of excess co-catalyst is that oil, such as a low molecular weight oligomer, is generated in the reactor, and this oil can condense in the recycle line at low temperature points. Some of this oil comes out with the product and is responsible for smoke during extrusion and molding operation.

There are various ways of introducing a co-catalyst, hereafter exemplified as TEA, into the reactor to contact the polyolefin-catalyst particles. If pure TEA is injected as a slug of liquid, the TEA wets a certain number of particles, which travel around in the bed, contacting other particles and sharing the excess TEA. This process continues until the TEA has been distributed to a maximum number of particles or consumed by reaction with minor gaseous constituents in the reactor, such as oxygen, CO, and moisture.

The particles which first contact the TEA from the injected slug have too much TEA on their surfaces. Since excess TEA reduces the activity of the catalyst, these particles show reduced activity. For some particles, the excess TEA is actually harmful in that it increases oil formation, such as by the formation of $C_{10}-C_{20}$ hydrocarbons. Following the injection of a slug of TEA, there is a period of time when some of the catalyst particles have excess TEA, some particles have a desirable amount, and some have a deficiency.

The activator can be mixed with an inert diluent, such as hexane, and pumped into the reactor as a dilute solution. This method tends to reduce the number of localized pockets of overloaded catalyst particles. But an inert material is introduced into the reactor and must, sooner or later, be removed, such as by venting, from the reactor. This venting also removes at least a portion of active reactants from the reactor. This venting operation, while necessary to keep the concentration of inerts within acceptable limits, does reduce operating efficiency.

Dilution of the TEA with ethylene has been tried, gives good results, and reduces or removes many of the problems and disadvantages mentioned above in connection with other methods of adding TEA.

Since liquid ethylene and TEA are miscible, with minimum stirring, we now prefer to add a continuous stream of ethylene-diluted TEA to the reactor, such as by pumping. We have found that the olefin/co-catalyst ratio can have limits of operability, varying from about 100,000/1 parts by weight to about 10/1 parts by weight. A typical ratio is from about 10,000/1 to about 1,000/1 parts by weight.

When adding other olefins, such as propylene or 1-butene as co-monomers, to the reactor, such as when copolymers of HDPE or LLDPE are being made, these olefins can be mixed with ethylene or can be added separately, with or without the TEA. These variables are easily managed by one skilled in the art.

At typical reactor conditions, such as 200—600 psig (1.4—4.1 M Pa) and 125—230°F., (50—110°C) separate feed lines of liquid ethylene and TEA can be joined to a static mixer, and the resultant mixture or solution can then be introduced into the reactor.

To exemplify embodiments of the invention, a background of typical start-up and operating conditions is given.

With about 200 lbs. (90.7 kg) of seed bed material in the reactor, ethylene was added to the reactor loop, and the pressure was increased to 500 psig., (3.45 M Pa) with enough gas flow to fluidize the catalyst bed. The heat of compression was sufficient to raise the reactor temperature to the range of 195—205°F, (90—96°C). Then, about 53cc of neat TEA were added to the reactor, as a scavenger for moisture, CO, and oxygen present in the system. This amount of TEA was used to remove these undesirable contaminants and to produce conditions suitable for polymerization. This scavenging amount was over and above any later TEA used and was not part of the invention. TEA added during actual polymerization conditions is involved in the invention.

When on-line gas analyzers showed that the moisture was below 10 ppm, oxygen below 1 ppm and CO was undetectable, a supported vanadium-based Ziegler-type catalyst was added to the bed at a rate of 8—9 g/hr. by means of a metering device delivering a measured amount periodically. An appropriate amount of co-monomer gas, such as propylene, was also added. A typical level of propylene in the total gas stream was about 2 molar %. A measurable polymerization reaction was noted by a measurable temperature increase across the reactor bed. This bed temperature was regulated by instruments connected with the heat exchanger.

The flow of co-catalyst to the reactor bed was started simultaneously with the flow of catalyst, to assure a desirable polymerization rate. And product was removed periodically from the reactor while fresh olefin was introduced.

As mentioned earlier, low molecular weight polymer oils can be formed. These undesirable oils can form smoke during extrusion and processing operations. The amount of these oils in a product sample can be determined by carbon tetrachloride ($CCl_4$) extraction, followed by gas chromatography (previously calibrated using internal standards).

A product sample, ground to 10 mesh in a Wiley mill, was extracted at 55°C for 2 hours, in a closed bottle. The bottle was then cooled to room temperature, and a sample was injected into a Hewlett-Packard 5880A flame ionization gas chromatograph. The concentrations of the $C_{10}-C_{20}$ straight chain alkanes were obtained directly from the plotter printout. These concentrations were reported as total CCl$_4$ extractables.

Variations in feeding the co-catalyst are now introduced, to show the value of the invention. Operating difficulties and product properties are noted for these variations.

Example I
Using neat (100%) TEA

With the reactor stabilized at the conditions given above, co-catalyst (TEA) was added as a neat liquid. Over a 48 hour period, 11.3cc of neat TEA were added per hour, by 1cc injections into the catalyst bed, with catalyst also being added at the typical rate. Twice during this operating period, the co-catalyst injection point plugged, as noted by the absence of liquid level lowering in the sight glass. This plugging was theorized as being due to polymer formation at the injection point outlet into the reactor. The plug was removed by increasing the pressure differential between the co-catalyst feed line and the reactor, after which normal polymerization resumed.

One important and easily measurable indication of product quality is the yield based on aluminum, that is, the pounds of polyolefin produced per pound of aluminum added. A desirable yield on aluminum is greater than 15,000.

The yield on aluminum of the neat TEA run was about 6,000.

An analysis of the product from this run, to determine the amount of C$_{10}$—C$_{20}$ oils by CCl$_4$ extraction, showed a total of 2317 ppm.

During another run, duplicating the above conditions, chunk formation (the formation of clumps of polymer, possibly due to fusing of many individual particles as a result of a temperature surge) was noted, since the product take-off line became plugged. Opening of the reactor revealed several clumps, or chunks, approximately fist size.

Example II
Using 10 wt.% TEA in hexane

With the reactor and polymerization stabilized as in Example I, catalyst was added at the same rate, while the co-catalyst was varied. Instead of neat TEA, a 10 wt.% solution of TEA in hexane was used. This variation offered a diluted co-catalyst to the reactor bed, but it also introduced an inert (hexane) into the system. The presence of added inert material required a higher purge rate, to maintain a desirable inert level. The hexane-diluted TEA was pumped into the reactor at a rate of 52cc/hour (equivalent to 5.2cc neat TEA/hr). The diluted TEA was used more efficiently in this Example, since the same production rate was achieved as in Example I.

Termination of duplicate runs using 10% hexane-TEA, due to chunk formation, was less frequent than terminations of runs involving neat TEA.

The yield on aluminum for several duplicate runs based on this Example was in the range of 10,000—12,000.

The CCl$_4$ extracted oils from this run amounted to 533 ppm, indicating that the method of adding a diluted solution of co-catalyst resulted in a reduction of smoke-producng oils.

Example III
Dilution of 10 wt.%. TEA-hexane with Propylene

The propylene co-monomer was added simultaneously with the TEA co-catalyst by use of the static mixer noted in the figure. The addition rate of TEA-hexane was 31cc/hr. (equivalent to 3.1cc neat TEA), mixed with a stream of propylene fed at a rate of 1.8 lbs. (0.8 kg)/hr. This method gave a further dilution of the TEA and also showed that TEA and propylene were miscible.

Duplicate runs showed less chunk formation in the product take-off than in previous examples.

The yield on aluminum was about 22,000.

The CCl$_4$ extractables for this run amounted to 350 ppm, confirming and improving the reduction of smoke-producing oils noted in the above examples.

Example III-A
Dilution of 10% TEA in hexane with ethylene

This example is similar to Example III, except that co-monomer propylene was added through the co-monomer line, while a portion of ethylene was mixed with TEA-hexane and added through the mixer line. The addition rate of TEA-hexane was 44cc/hr. (equivalent to 4.4cc neat TEA), this TEA-hexane stream was mixed with ethylene (2 lbs. (0.9 kg)/hr.), and the resultant mixture was fed to the reactor. The TEA-hexane mixed with the ethylene easily, with no problems in feeding the mixture to the reactor.

The yield on aluminum was about 16,000.

Example IV
3 wt.% TEA in hexane with ethylene

This Example was carried out similarly to Example III—A, except that 3 wt.% TEA in hexane was used. In one of the feed lines to the static mixer, 3 wt.% TEA-hexane solution was added at a rate of 60cc/hr. (1.8cc/hr. neat), with this solution being mixed with 2 lbs. (0.9 kg) ethylene/hr, and the resultant mixture being added to the reactor, with no mixing or feeding problems.

The yield on aluminum was about 30,000.

Example V
TEA diluted with ethylene

When neat TEA is pumped to the mixer at 1.8cc/hr. and mixed with 10 lbs. (4.54 kg) ethylene/hr., the mixture is easily pumped to the reactor, giving a desirable polymerization reaction rate.

The yield on aluminum is expected to be greater than 30,000.

As the olefin/co-catalyst ratio is increased beyond the ratio of Example V, the yield on aluminum is expected to increase. At the same time, the efficiency of operation is expected to increase due to the expected decrease in chunk formation. And the venting of inerts is expected to decrease, due to the use of olefin as a co-catalyst diluent instead of hexane.

Another measure of operating efficiency of a polymerization reactor is the percentage of on-line operation hours per month. One important factor in on-line operation is the amount of down time caused by chunk formation and subsequent plugging of product take-off system.

A consistent improvement in on-line operating efficiency was noted, from a low of about 49—63% for neat TEA to 67—80% for 10% TEA-hexane to 80—90% for 10% TEA-hexane diluted with olefin. An operating efficiency of greater than 90% is expected when TEA is increasingly diluted with ethylene.

## Claims

1. A method of adding a co-catalyst under operating conditions to a reactor producing polyolefin using a Ziegler-type catalyst characterised in that the co-catalyst is added to a gas phase fluidized bed in the reactor in a polymerizable olefin.

2. A method according to Claim 1, wherein the co-catalyst is added when in solution in the polymerizable olefin.

3. A method according to Claim 1 or Claim 2, wherein the co-catalyst is a Periodic Group 1—3 organo-metallic compound and the olefin with which it is added is the monomer to be polymerized or is a co-monomer therewith.

4. A method according to any one of the preceding Claims, wherein the weight ratio of the olefin to the co-catalyst is from 100,000:1 to 10:1.

5. A method according to Claim 4, wherein the ratio is from 10,000:1 to 1,000:1.

6. A method according to any one of the preceding Claims, wherein the operating conditions are a temperature from 50°C (125°F) to 110°C (225°F) and a pressure from 1.4 to 4.1 M Pa (200—600 psig).

7. A method according to any one of the preceding Claims, wherein the co-catalyst is an aluminum alkyl.

8. A method according to any one of the preceding Claims, wherein the principal component of the olefin is ethylene and a minor olefin (co-monomer) is propylene or 1-butene.

9. A method of adding an aluminum alkyl co-catalyst to a gas-phase fluidized-bed polyolefin reactor at the operating conditions of about 50—110°C (125—225°F) and 1.4—4.1 MPa (200—600 psig), using a Ziegler-type catalyst, comprising the steps of

(a) mixing the aluminum alkyl with the monomer or co-monomer olefin, forming a dilute solution wherein the olefin/co-catalyst weight ratio varies for 100,000:1 to 10:1, and

(b) introducing the solution of co-catalyst and olefin into the reactor, at a reaction-sustaining rate such that the polymer yield based on aluminum is greater than 15,000.

10. The method of Claim 9, wherein the catalyst is a vanadium-based Ziegler-type catalyst.

## Patentansprüche

1. Ein Verfahren zur Zugabe eines Cokatalysators unter Betriebsbedingungen zu einem unter Verwendung eines Katalysators des Ziegler-Typs Polyolefin erzeugenden Reaktor, dadurch gekennzeichnet, daß der Cokatalysator einer Gasphasen - Wirbelschicht im Reaktor in einem polymerisierbaren Olefin zugegeben wird.

2. Ein Verfahren nach Anspruch 1, worin der Cokatalysator zugegben wird, wenn er im polymerisierbaren Olefin gelöst ist.

3. Verfahren nach Anspruch 1 oder 2, worin der Cokatalysator eine Organometallverbindung der Gruppe 1—3 des periodischen Systems ist und das Olefin, mit dem er zugegeben wird, das zu polymerisierende Monomer oder ein Comonomer mit demselben ist.

4. Ein Verfahren nach einem der vorhergehenden Ansprüche, worin das Gewichtsverhältnis vom Olefin zum Cokatalysator 100,000:1 bis 10:1 beträgt.

5. Ein Verfahren nach Anspruch 4, worin das Verhältnis von 10,000:1 bis 1000:1 beträgt.

6. Ein Verfahren nach einem der vorher-henden Ansprüche, worin die Betriebsbed-ingungen eine Temperatur von 50°C (125°F) bis 110°C (225°F) und ein Druck von 1,4—4,1 M Pa (200—600 psig) sind.

7. Ein Verfahren nach einem der vorhergehenden Ansprüche, worin der Cokatalysator ein Aluminiumalkyl ist.

8. Ein Verfahren nach einem der vorhergehenden Ansprüche, worin die Hauptbestandteil des Olefins Äthylen ist und ein in geringeren Mengen vorhandenes Olefin (Comonomer) Propylen oder 1-Buten ist.

9. Ein Verfahren zur Zugabe eines Aluminiumalkyl - Cokatalysators zu einem Gasphasen - Wirbelschicht - Polyolefinreaktor unter den Betriebsbedingungen von etwa 50—110°C (125—225°F) und 1,4—4,1 M Pa (200—600 psig) unter Verwendung eines Katalysators des Ziegler-typs, umfassend die Schritte des

(a) Mischens des Aluminiumalkyls mit dem Olefinmonomer oder -comonomer, Herstellens einer verdünnten Lösung, worin das Gewichtsverhältnis Olefin/Cokatalysator von 100,000:1 bis 10:1 variiert, und

(b) Einbringens der Lösung aus Cokatalysator und Olefin in den Reaktor mit einer die Reaktion aufrechterhaltenden Rate, so daß die Polymerausbeute bezogen auf Aluminium mehr als 15,000 beträgt.

10. Das Verfahren nach Anspruch 9, worin der Katalysator ein Katalysator des Zielger-typs auf Vanadiumbasis ist.

## Revendications

1. Méthode d'addition d'un co-catalyseur en conditions d'utilisation à un réacteur produisant une polyoléfine en utilisant un catalyseur du type Ziegler caractérisée en ce que le co-catalyseur est ajouté à un lit fluidisé en phase gazeuse dans le réacteur dans une oléfine polymérisable.

2. Méthode selon la revendication 1, où le co-catalyseur est ajouté lorsqu'il est en solution dans l'oléfine polymérisable.

3. Méthode selon la revendication 1 ou la revendication 2, où le co-catalyseur est un composé organométallique du Groupe Périodique 1—3 et l'oléfine avec laquelle il est ajouté est le monomère à polymériser ou est un comonomère avec lui.

4. Méthode selon l'une quelconque des revendications précédentes, où le rapport pondéral de l'oléfine au co-catalyseur est de 100.100:1 à 10:1.

5. Méthode selon la revendication 4, où le rapport est de 10.000:1 à 1.000:1.

6. Méthode selon l'une quelconque des revendications précédentes, où les conditions de fonctionnement sont une température de 50°C (125°F) à 110°C (225°F) et une pression de 1,4 à 4,1 mPa (200—600 psig).

7. Méthode selon l'une quelconque des revendications précédentes, où le co-catalyseur est un alkyl aluminium.

8. Méthode selon l'une quelconque des revendications précédentes, où le composant principal de l'oléfine est l'éthylène et une oléfine mineure (comonomère) est le propylène ou le 1-butène.

9. Méthode d'addition d'un co-catalyseur d'alkyl aluminium à un réacteur de polyoléfine à lit fluidisé en phase gazeuse aux conditions de fonctionnement d'environ 50—110°C (125—225°F) et 1,4—4,1 MPa (200—600 psig), en utilisant un catalyseur du type Ziegler, comprenant les étapes de:

(a) mélanger l'alkyl aluminium à l'oléfine du monomère ou du comonomère, en formant une solution diluée où le rapport pondéral oléfine/co-catalyseur varie de 100.000:1 à 10:1 et

(b) introduire la solution de co-catalyseur et de l'oléfine dans le réacteur, à une allure entretenant la réaction telle que le rendement du polymère basé sur l'aluminium soit supérieur à 15.000.

10. Méthode de la revendication 9, où le catalyseur est un catalyseur du type Ziegler à base de vanadium.

Figure 1.

PURGE

REACTOR

HEAT EXCHANGER

CO-CATALYST

LIQUID OLEFIN

MIXER

CATALYST

COOLING WATER

SIEVE PLATE

PRODUCT TAKE-OFF

HYDROGEN

CO-MONOMER

ETHYLENE

COMPRESSOR

0 099 660

1